# EUROPEAN PATENT APPLICATION

(11) **EP 1 515 276 A2**
(43) Date of publication of application: **16.03.2005**
(21) Application number: 04255505.2
(22) Date of filing: 10.09.2004
(51) Int. Cl.: G06T 7/00

(54) **Generating animated image file from video data file frames**

(30) Priority: 12.09.2003 US 660969
(71) Applicant: Hewlett-Packard Development Company, L.P., Houston, Texas 77070 (US)
(72) Inventor: Jia, Charles, San Diego, CA 92130 (US); Zhou, Laura, San Diego, CA 92130 (US)
(74) Representative: Jackson, Richard Eric

(57) **Abstract**

A method (400) of one embodiment of the invention is disclosed that includes selecting a number of key frames from a video data file (402). An animated image file is then generated from the key frames (420).

## Description

### BACKGROUND

With the advent of digital photography, many users have vast collections of digital photos. To be able to quickly scan through a large number of photos to locate a desired photo, users commonly employ thumbnail images. Thumbnail images are reduced-in-size images of the photos, so that a large number of thumbnail images can be viewed at the same time. Once the user finds the thumbnail image for a desired photo, he or she can typically select the photo to view the full-size image of the photo.

Digital video cameras are also becoming popular as their prices have decreased. Digital video cameras include digital camcorders, as well as digital cameras that can capture still digital photos in addition to digital videos. Both types of digital video cameras thus allow users to record moving images as video data files. The video data files can be transferred from the digital video cameras to host computing devices, such as desktop and laptop computers, on which users can manipulate the video, adding captions, editing the video, and so on. As with digital photography, digital video cameras have enabled users to assemble large numbers of video data files.

However, unlike digital photography, there is usually no easy way to view a large number of video data file representations at the same time in order to select a desired video data file.

### SUMMARY

A method of one embodiment of the invention includes selecting a number of key frames from a video data file. An animated image file is then generated from the key frames.

### BRIEF DESCRIPTION OF THE DRAWINGS

The drawings referenced herein form a part of the specification. Features shown in the drawing are meant as illustrative of only some embodiments of the invention, and not of all embodiments of the invention, unless otherwise explicitly indicated, and implications to the contrary are otherwise not to be made.
FIGs. 1A and 1B are diagrams of a sequence of video frames of a representative video data file, in conjunction with which embodiments of the invention may be practiced.
FIG. 2 is a diagram of an example animated image file corresponding to the representative video data file of FIGs. 1A and 1B, according to an embodiment of the invention.
FIG. 3 is a diagram showing the relationship between an animated image file and a video data file, according to an embodiment of the invention.
FIG. 4 is a flowchart of a method for generating an animated image file for a video data file, according to an embodiment of the invention.
FIG. 5 is a diagram illustratively depicting the segmentation of a video data file into one or more shot, or scene, segments, according to an embodiment of the invention.
FIG. 6 is a diagram illustratively depicting the extraction of key frames of each shot segment of a video data file, according to an embodiment of the invention.
FIG. 7 is a flowchart for displaying animated image files from which a user is able to select a desired animated image file to view a corresponding video data file, according to an embodiment of the invention.
FIG. 8 is a block diagram of a video-recording device, according to an embodiment of the invention.
FIG. 9 is a block diagram of a computing device, according to an embodiment of the invention.

### DETAILED DESCRIPTION OF THE DRAWINGS

In the following detailed description of exemplary embodiments of the invention, reference is made to the accompanying drawings that form a part hereof, and in which is shown by way of illustration specific exemplary embodiments in which the invention may be practiced. These embodiments are described in sufficient detail to enable those skilled in the art to practice the invention. Other embodiments may be utilized, and logical, mechanical, and other changes may be made without departing from the spirit or scope of the present invention. The following detailed description is, therefore, not to be taken in a limiting sense, and the scope of the present invention is defined only by the appended claims.

### Overview

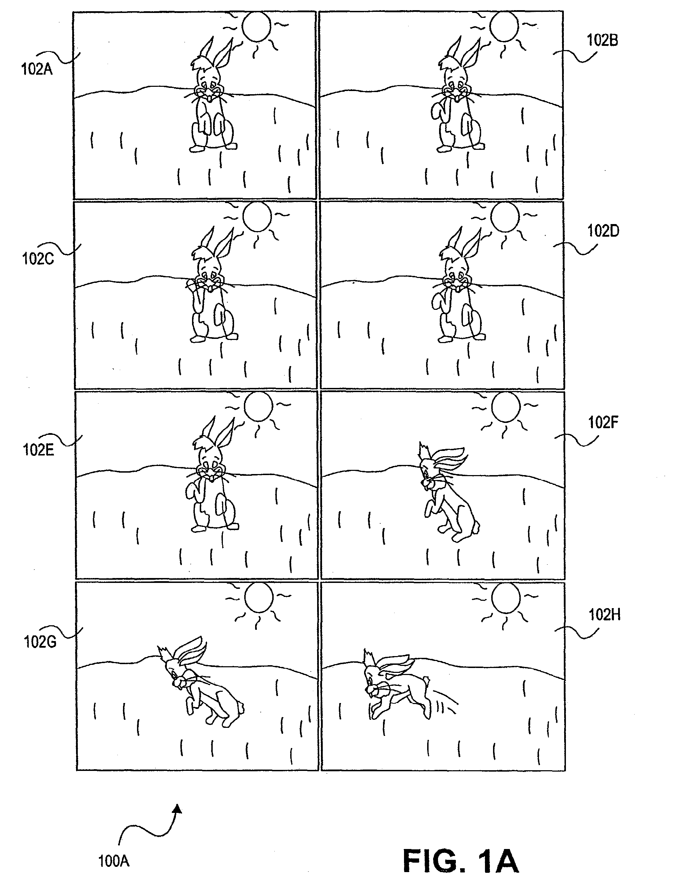

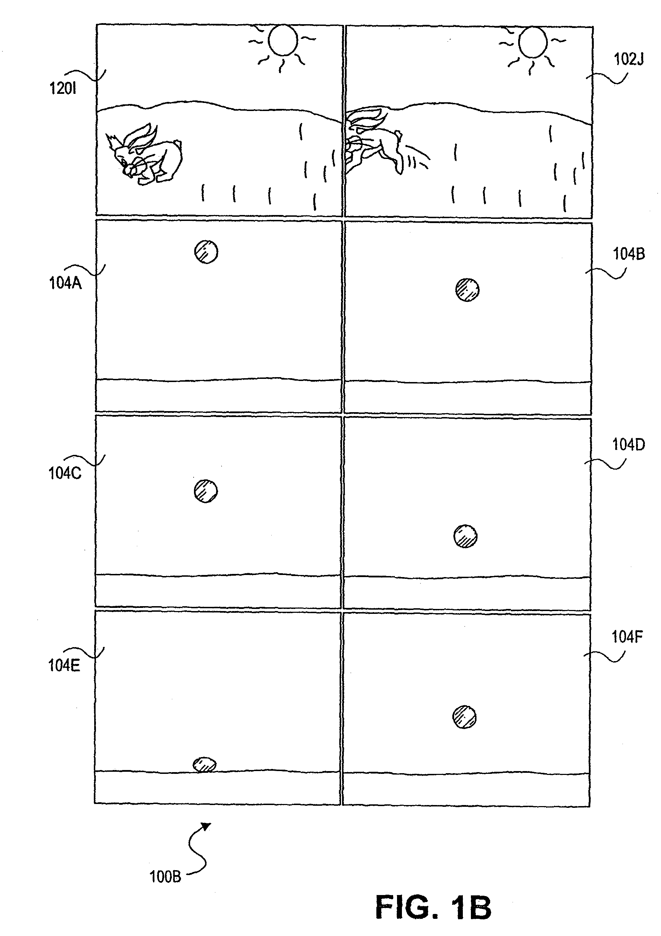

FIGs. 1A and 1B show a representative video data file, in conjunction with which embodiments of the invention may be practiced. The video data file is divided into two parts, a video data file part 100A of FIG. 1A and a video data file part 100B of FIG. 1B, which are collectively referred to as the video data file 100. The video data file 100 may be formatted in accordance with a number of different file formats, such as the Moving Pictures Experts Group (MPEG) file format, the QuickTime file format, and the Microsoft Windows audio video interleaved (AVI) file format. The video data file 100 may have been generated by the recording of video by a digital video camera, directly resulting in the video data file 100, or by the recording of video by an analog video camera, where the analog video is then digitized to result in the video data file 100. The video data file 100 may also be referred to simply as a video file.

The video data file 100 includes the frames 102A, 102B, 102C, 102D, 102E, 102F, 102G, 102H, 102I, and 102J, collectively referred to as the frames 102, and the frames 104A, 104B, 104C, 104D, 104E, and 104F, collectively referred to as the frames 104. The frames 102 represent a first shot, or scene, and the frames 104 represent a second shot, or scene. For example, a user recording the video data file 100 may have turned on the video camera to record the rabbit of the frames 102, turned off the video camera, and then turned it back on to record the bouncing ball of the frames 104.

As another example, the user may have directed the video camera to record first the rabbit of the frames 102, and then moved the camera to direct it to then record the bouncing ball of the frames 104. A shot or scene can be generally considered as a discrete recordhg of different subject matter within the video data file 100. Different shots or scenes may be recorded at different discrete times, where a video camera is turned off in-between different shots or scenes, or during the same period of time, where the camera's focus is directed to different subject matter to start a new shot or scene.

The frames 102 and the frames 104 are successively sequenced in order to show the video data file 100. As can be appreciated by those of ordinary skill within the art, there is likely to be a much larger number of frames within each of the scenes represented by the frames 102 and the frames 104. For instance, there may be at least 15 frames-per-second (fps), and as many as 60 or more fps, in a typical video data file. A lesser number of frames is shown in FIGs. 1A and 1B for illustrative convenience. As can also be appreciated by those of ordinary skill within the art, the frames of a video data file are not usually as clear and as of high quality as the frames 102 and 104 of FIGs. 1A and 1B, due to the manner by which video data files are recorded and compressed. The frames 102 and 104 of FIGs. 1A and 1B are also discretely depicted as being clear and of high quality for illustrative clarity.

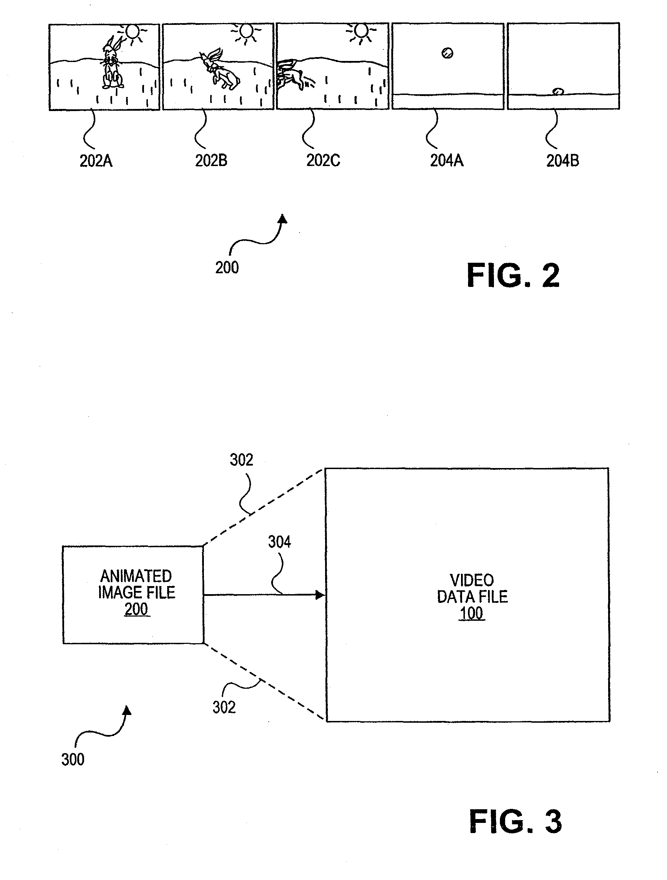

FIG. 2 shows an example animated image file 200 corresponding to the video data file 100, according to an embodiment of the invention. The animated image file 200 includes five frames: the frames 202A, 202B, and 202C, collectively referred to as the frames 202, and the frames 204A and 204B, collectively referred to as the frames 204. The frames 202 depict in a condensed manner the frames 102 of FIGs. 1A and 1B, and the frames 204 depict in a condensed manner the frames 104 of FIGs. 1A and 1B. The frames 202A, 202B, and 202C specifically correspond to the frames 102A, 102F, and 102J, whereas the frames 204A and 204B specifically correspond to the frames 104B and 104E. The animated image file 200 may be formatted in accordance with a number of different file formats, such as particularly the animated Graphics Interchange Format (GIF).

The frames 202 and 204 of the animated image file 200 have in one embodiment at least four characteristics. First, there is a lesser number of the frames 202 and 204 than the number of the frames 102 and 104 of FIGs. 1A and 1B. For example, for ten minutes of recorded video within a given video data file, there may be more than 9,000 frames, whereas the corresponding animated image file 200 may have only 20 or 30 frames. The animated image file 200 is thus significantly smaller in size than the video data file 100 to which it corresponds.

Second, the frames 202 and 204 represent the key frames of the frames 102 and 104. A key frame in the context of this embodiment of the invention is one of the best frames of a video data file, which in conjunction with the other key frames of the video data file optimally or best represents the shot(s) or scene(s) of the video data file. The frames 202 and 204 of the animated image file 200 therefore encompass the key frames of the frames 102 and 104 of both scenes, or shots, of the video data file 100. Thus, the frames 202A, 202B, and 202C show the rabbit standing, preparing to move, and moving, whereas the frames 204A and 204B show the ball starting to drop a nd the ball bouncing off the ground. There is preferably at least one key frame for each different shot or scene within a video data file. The animated image file 200 serves in this manner as a thumbnail file for the video data file 100.

Third, the frames 202 and 204 of the animated image file 200 are smaller, or reduced, in size as compared to the frames 102 and 104 of the video data file 100 of FIGs. 1A and 1B. The frames 202 and 204 specifically result from uniformly reducing in size their corresponding frames of the frames 102 and 104. Alternatively, the frames of an animated image file may result from cropping their corresponding frames of a video data file. Furthermore, a frame of an animated image file may result from combining a number of surro unding, or preceding and/or succeeding, frames of a corresponding key frame of a video data file, to enhance the image quality of the frame of the animated image file. The frames 202 and 204 of the animated image file 200 are repetitively successively sequenced to provide a thumbnail preview of the video data file 100. More generally, the frames 202 and 204 of the animated image file 200 are differently sized as compared to the frames 102 and 104 of the video data file 100. That is, the frames 202 and 204 are resized from the frames 102 and 104, and not necessarily reduced in size.

Fourth, the frames 202 and 204 of the animated image file 200 may be keyed to a subset of the same or different colors to which their corresponding frames of the frames 102 and 104 of the video data file 100 of FIGs. 1A and 1B are keyed. For example, the animated image file 200 may be able to have as many as 256 or less different colors, whereas the video data file 100 may be able to have as many as millions of different colors. Each color within the key frames of the frames 102 and 104 of the video data file 100 that is not specifically represented by a corresponding color within the frames 202 and 204 of the animated image file 200 is therefore keyed to the closest color within the frames 202 and 204 of the animated image file 200.

FIG. 3 shows a scenario 300 depicting the relationship between the animated image file 200 of FIG. 2 and the video data file 100 of FIGs. 1A and 1B, according to an embodiment of the invention. The animated image file 200 and the video data file 100 may both be stored as data on a computer-readable medium. The medium may be a volatile or a non-volatile medium. The medium may also be a magnetic medium, such as a floppy disk or a hard disk drive, an optical medium, such as a compact disc (CD)-type medium or a digital versatile disc (DVD)-type medium, and/or a semiconductor medium, such as flash memory or dynamic random access memory (DRAM). Furthermore, the animated image file 200 and the video data file 100 may be stored at different locations.

The animated image file 200 corresponds to the video data file 100, as indicated by the dotted lines 302. Furthermore, where the animated image file 200 is displayed on a display, a user may select the animated image file 200, such as by moving a cursor over the displayed file 200 and clicking a pointing device button, to cause the video data file 100 to be displayed, as indicated by the arrow 304. Where there is a large number of different video data files, the user may thus be able to select a particular video data file to view by viewing the animated image files for all the video data files at the same time, and selecting the animated image file for the desired video file.

For example, each animated image file may have its frames repetitively successively sequenced to display the animated image file. This provides the user with thumbnail previews of the video data files to which the animated image files correspond. The frames of a given animated image file may take as little as a few seconds to be completely displayed, and likely not longer than twenty or thirty seconds. Once the user has selected one of the animated image files, the video data file corresponding to the selected animated image file is displayed. That is, the frames of the video data file are successively sequenced to display the video data file. The frames of a given video data file may take as long as a large number of minutes, or a few number of hours, to be completely displayed. Completely displaying an animated image file thus takes considerably less time than completely displaying its corresponding video data file.

### Generating animated image files from video data file frames

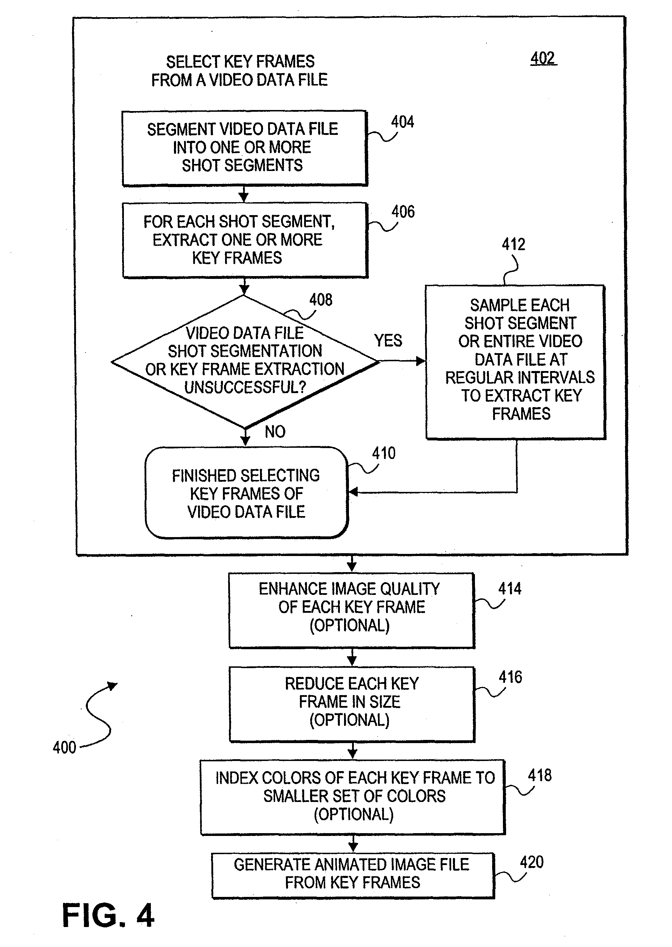

FIG. 4 shows a method 400 for generating the animatedimage file 200 from the video data file 100, according to an embodiment of the invention. Like other methods of different embodiments of the invention, the method 400 may be implemented as a computer program stored on a computer-readable medium. The medium may be a volatile or a non-volatile medium, and as has been described, may be a magnetic medium, an optical medium, and/or a semiconductor medium.

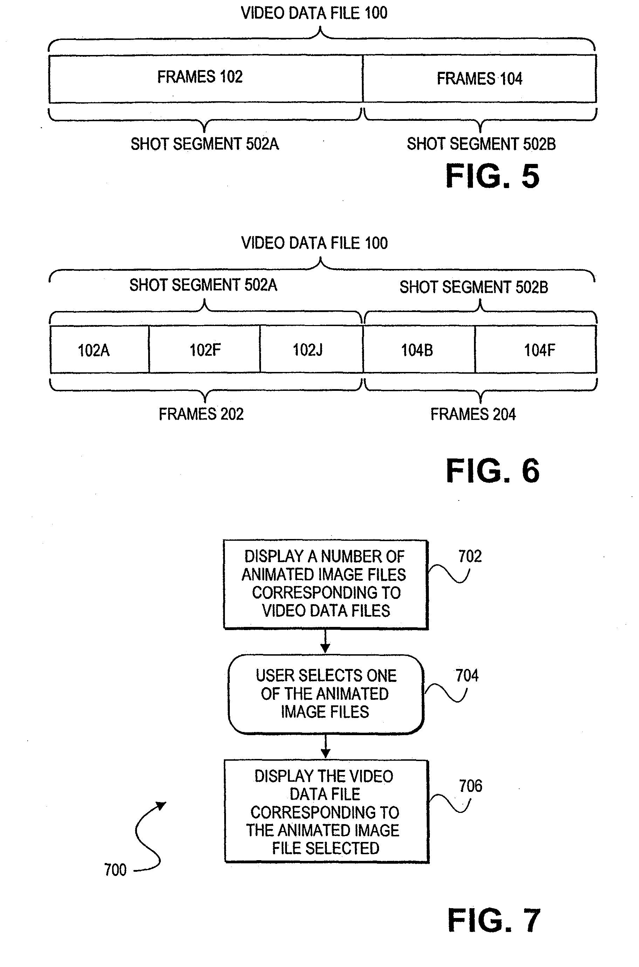

First, the key frames are selected from the video data file 100 (402). This can entail segmenting the video data file into one or more shot, or scene, segments (404). FIG. 5 illustratively depicts the performance of 404, according to an embodiment of the invention. The video data file 100 includes the frames 102, corresponding to one shot or scene, and the frames 104, corresponding to another shot or scene. Therefore, the video data file 100 is divided into a first shot segment 502A, and a second shot segment 502B, collectively referred to as the shot segments 502. There may be as few as a single shot seg ment, or a large number of shot segments, within a given video data file. Shot segmentation of a video data file may be accomplished by performing shot boundary detection analysis, principal component analysis, zoned image content analysis, color coded analysis, adjacent frame content analysis, and/or motion detection analysis, as can be appreciated by those of ordinary skill within the art.

Referring back to FIG. 4, once the video data file 100 has been segment into one or more shot segments 502, one or more key frames are extracted for each of the shot segments 502 (406). FIG. 6 illustratively depicts the performance of 406, according to an embodiment of the invention. The frames 102A, 102F, and 102J are selected as the key frames 202 for the shot segment 502A, and the frames 104B and 104F are selected as the key frames 204 for the shot segment 502B, of the video data file 100. There is at least one key frame for each of the shot segments 502. Key frame selection, or extraction, may be accomplished by performing histogram analysis, object segmentation analysis, object motion detection analysis, and/or object tracking analysis, as can be appreciated by those of ordinary skill within the art.

Referring back to FIG. 4, in some instances shot segmentation of the video data file 100, or key frame extraction within one or more of the shot segments 502, may not properly occur, or otherwise be said to be unsuccessful or be said to have failed (408). As one illustrative example of shot segmentation and key frame extraction not properly occurring, a video of a white blanket may have all its constituent frames being very similar to each other, such that no frame or frames can be extracted as a key frame or key frames via the approach described in the previous paragraphs.

In such cases, key frames are alternatively extracted using straightforward sampling techniques (412). For example, if shot segmentation was successful but key frame extraction from each of the shot segments 502 was unsuccessful, then every n th frame of each of the shot segments 502 may be sampled, or extracted, to obtain the key frames of each of the shot segments 502. As another example, if shot segmentation of the video data file 100 itself was unsuccessful, then every nth frame of the video data file 100 may be sampled, or extracted, to obtain the key frames of the video data file 100. The number of frames sampled as the key frames depends on the desired length of the animated data file 200 and/or the length of the video data file 100 or its constituent shot segments 502.

Ultimately the key frames 202 and 204 of the video data file 100 are selected (410), either by shot segmentation (404) and key frame extraction (406), or by key frame sampling (412). Next, the image quality of each of the key frames 202 and 204 is optionally enhanced (414). For example, as has been described, each of the key frames 202 and 204 may be combined with one or more surrounding frames, such as one or more preceding frames and/or one or more succeeding frames, to enhance the key frame's image quality.

Each of the key frames 202 and 204 is also optionally reduced in size (416). This results in the key frames 202 and 204 being smaller, thumbnail image frames, as compared to the potentially larger image frames 102 and 104 of the video data file 100. Size reduction may be accomplished by uniformly or otherwise reducing each of the key frames 202 and 204 in size, or by simply cropping each of the key frames 202 and 204. The colors of each of the key frames 202 and 204 may optionally be keyed to a smaller set of colors than that to which they are keyed within the video data file 100 (418).

For example, in one embodiment, all the different colors that are used within the key frames 202 and 204 may be counted, and a subset of colors occurring may be selected by using a clustering approach. That is, concentrations, or clusters, of similar colors are found, and the color clusters having the highest frequency, or greatest occurrence, are selected and each represented by a single color. All the colors within the key frames 202 and 204 are thus mapped, or changed, to these colors. The final result is the generation of the animated image file 200 from the key frames 202 and 204 (420), by assembling the key frames 202 and 204 as the animated image file 200, as the key frames 202 and 204 may have had their image quality enhanced (414), their size reduced (416), and their colors re-indexed (418).

### Applications and devices

FIG. 7 shows a method 700 for using a number of animated image files representing corresponding video data files, according to an embodiment of the invention. First, the animated image files are displayed (702). That is, the frames of the animated image files are repetitively successively sequenced to provide thumbnail previews of the video data files. The display may be in conjunction with a web page of an Internet web site, a video application program running on a computing device, or in conjunction with another scenario, such as by being displayed on an embedded display of an imaging or printing device.

The user ultimately selects one of the animated image files that are being displayed (704). The user may cause a cursor to move over a desired animated image file with a pointing device, and then click on the desired animated image file. In response, the video data file to which the selected animated image file corresponds is displayed (706). That is, the frames of this video data file are successfully sequenced to display the video data file.

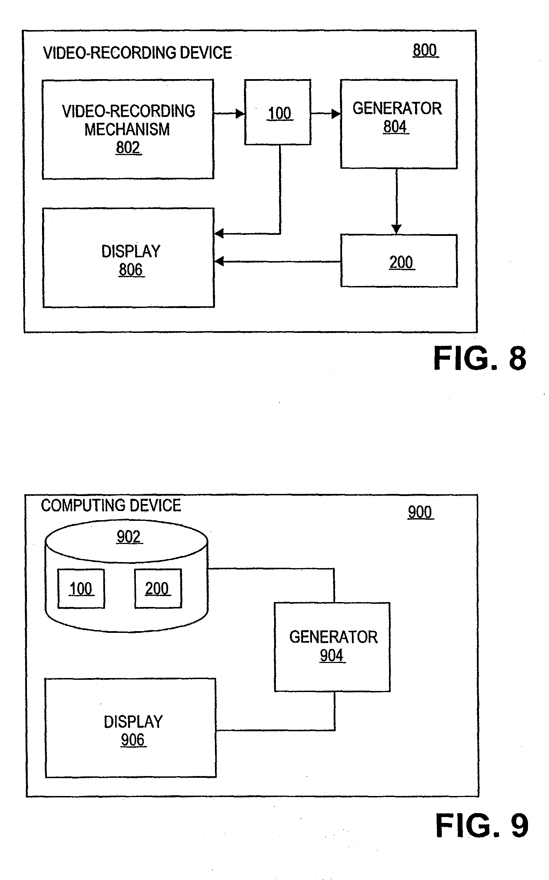

FIG. 8 shows a video-recording device 800, according to an embodiment of the invention. The video-recording device 800 may be a video camera, or another type of video-recording device. The video-recording device 800 includes a video-recording mechanism 802, a generator 804, and a display 806. The device 800 may also include other components, in addition to and/or in lieu of those depicted in FIG. 8.

The video-recording mechanism 802 includes those components needed to record video, such as lenses, electronics, and media on which the video data file 100 is recorded. Preferably, the video-recording mechanism 802 is a digital video-recording mechanism that directly records the video data file 100. Alternatively, the video-recording mechanism 802 may be an analog video-recording mechanism that records analog video that is digitized to result in the video data file 100.

The generator 804 generates the animated reduced image file 200 from the video data file 100, such as by performing the method 400 of FIG. 4 that has been described. Where the video-recording mechanism 802 is analog, the generator 804 also digitizes the recorded video to result in the video data file 100 before generating the animated reduced image file 200. The generator 804 may be a combination of hardware, software, and other types of components.

The generator 804 may display the animated reduced image file 200 on the display 806, along with other animated reduced image files, from which the user is able to select a desired animated image file to view a corresponding video data file. The generator 804 may thus perform the method 700 of FIG. 7 that has been described. The display 806 is preferably an embedded display, and may be a liquid-crystal display (LCD), or another type of display.

FIG. 9 shows a computing device 900, according to an embodiment of the invention. The computing device 900 may be a general-purpose computing device, such as a desktop, laptop, or handheld computer or computing device, or it may be a special-purpose device intended for video display and/or editing. The computing device 900 includes a computer-readable medium 902, a generator 904, and optionally a display 906. The device 900 may also include other components, in addition to and/or in lieu of those depicted in FIG. 9.

The computer-readable medium 902 may be a volatile or a non-volatile medium, and may be a magnetic, optical, and/or a semiconductor medium. The medium 902 stores the video data file 100, its corresponding animated image file 200, as well as potentially other video data files and animated image files. The generator 904 generates the animated image file 200 from the video data file 100, such as by performing the method 400 of FIG. 4. The generator 904 may be a combination of hardware, software, and other types of components.

The generator 904 may display the animated image file 200 on the display 906, along with other animated image files, from which the user is able to select a desired animated file to view a corresponding video data file. The generator 904 may thus perform the method 700 of FIG. 7 that has been described. The display 906 may be an embedded or an external display, and may be a LCD, a cathode ray-tube (CRT) display, or another type of display.

### Conclusion

It is noted that, although specific embodiments have been illustrated and described herein, it will be appreciated by those of ordinary skill in the art that any arrangement that is calculated to achieve the same purpose may be substituted for the specific embodiments shown. Other applications and uses of embodiments of the invention, besides those described herein, are amenable to at least some embodiments. This application is intended to cover any adaptations or variations of the present invention. Therefore, it is manifestly intended that this invention be limited only by the claims and equivalents thereof.

## Claims

1. A method (400) comprising:
selecting a plurality of key frames from a video data file (402); and, generating an animated image file from the plurality of key frames (420).

2. The method of claim 1, further comprising, prior to generating the animated image file, reducing in size each key frame (416).

3. The method of claim 2, wherein reducing in size each key frame comprises uniformly reducing in size each key frame.

4. The method of claim 2, wherein reducing in size each key frame comprises cropping each key frame.

5. The method of claim 1, further comprising, prior to generating the animated image file, enhancing image quality of each key frame (414).

6. The method of claim 5, wherein enhancing the image quality of each key frame comprises combining the key frame with one or more frames surrounding the key frame.

7. The method of claim 1, further comprising, prior to generating the animated image file, indexing colors of each key frame to colors of the animated image file (418).

8. The method of claim 1, wherein selecting the plurality of key frames from the video data file comprises:
segmenting the video data file into one or more shot segments (406); and,
for each shot segment, extracting one or more of the plurality of key frames from the shot segment (406).

9. The method of claim 8, wherein segmenting the video data file into the one or more shot segments comprises utilizing one or more of: shot boundary detection analysis, principal component analysis, zoned image content analysis, color coded analysis, adjacent frame content analysis, and motion detection analysis.

10. The method of claim 8, wherein extracting the one or more of the plurality of key frames from the shot segment comprises utilizing one or more of: histogram analysis, object segmentation analysis, object motion detection analysis, and object tracking analysis.

11. The method of claim 1, wherein selecting the plurality of key frames from the video data file comprises sampling the video data file at substantially regular intervals to obtain the plurality of key frames.
